# EUROPÄISCHE PATENTSCHRIFT

(11) **EP 1 672 560 B1**
(45) Veröffentlichungstag und Bekanntmachung des Hinweises auf die Patenterteilung: **08.04.2009**
(21) Anmeldenummer: 04405780.0
(22) Anmeldetag: 16.12.2004
(51) Int. Cl.: G06K 7/00, G06K 19/07

(54) **Induktives Identifikationssystem**
Inductively coupled identification system
Système d'identification à couplage inductif

(43) Veröffentlichungstag der Anmeldung: 21.06.2006
(73) Patentinhaber: Schweizerische Bundesbahnen SBB, 3000 Bern 65 (CH)
(72) Erfinder: Baiker, Stefan, 4059 Basel (CH)
(74) Vertreter: Rutz & Partner

(56) Entgegenhaltungen:
- WO-A-01/45038
- WO-A-95/01062
- US-A- 5 084 699
- US-A1- 2003 146 839
- US-A1- 2004 201 468

## Beschreibung

Die Erfindung betrifft ein induktives Identifikationssystem nach dem Oberbegriff des Patentanspruchs 1.

Wie in [1], Klaus Finkenzeller, RFID-Handbuch, 3. Auflage, Carl Hanser Verlag, München 2002, Seite 1, beschrieben, haben automatische Identifikationsverfahren (Auto-ID) in vielen Dienstleistungsbereichen, wie in der Beschaffungs- und Distributionslogik, im Handel, in Produktionsbetrieben, insbesondere in Materialflusssystemen, in den letzten Jahren grosse Verbreitung gefunden.

Von grosser Bedeutung unter den automatischen Identifikationssystemen sind Transpondersysteme, bei denen, ein Transponder an den zu identifizierenden Objekten angebracht wird und mittels eines Lesegeräts und unter Verwendung magnetischer oder elektromagnetischer Felder abgefragt wird. Da bei diesen Systemen normalerweise Radiowellen angewendet werden, werden sie auch als RFID-Systeme bezeichnet. Bei entsprechend ausgestalteten RFID-Systemen ist es auch möglich, vom Lesegerät abgegebene Daten im Transponder zu speichern.

Das Lesegerät beinhaltet typischerweise ein Hochfrequenzmodul (Sender und Empfänger), eine Steuereinheit, ein Koppelelement und normalerweise eine Schnittstelle, die es erlaubt, Daten mit einem Rechner, beispielsweise einem Zentralrechner eines Verkehrsleitsystems oder einem dezentralen Personalcomputer, auszutauschen.

Der Transponder, als Träger der Identifikationsdaten und gegebenenfalls weiterer Daten dient, besteht normalerweise aus einem Mikrochip und einem Koppelelement. Beispielsweise können in einem an einen Container angebrachten Transponder die Identifikationsdaten des Containers sowie Daten über die im Container gelagerte Fracht und gegebenenfalls Daten betreffend den Zustand dieser Fracht gespeichert sein (siehe z.B. [2], EP 1 408 207 A1).

Ausserhalb des Ansprechbereichs des Lesegeräts verhält sich der Transponder, der in der Regel keine Spannungsversorgung besitzt, vollkommen passiv. Erst innerhalb des Ansprechbereichs eines Lesegeräts wird der Transponder aktiv. Die zum Betrieb des Transponders benötigte Energie wird ebenso wie der Takt und die Daten drahtlos zum Transponder übertragen.

Wie in [1]; Seiten 22-23 weiter beschrieben ist, sind die wichtigsten Unterscheidungskriterien für RFID-Systeme die Betriebsfrequenz des Lese- bzw. des Lese- und Schreibgerätes (Transceiver), das physikalische Kopplungsverfahren und die Reichweite.

RFID-Systeme mit sehr kleinen Reichweiten von typischerweise 1 cm, die als "Close-coupling-Systeme" bezeichnet werden, arbeiten mit elektrischen und magnetischen Feldern und Frequenzen normalerweise bis 30 MHz.

RFID-Systeme mit Schreib- und Lesereichweiten bis zu etwa 1 m werden dem Begriff "Remote-coupling-Systeme" untergeordnet, die fast ausschliesslich eine induktive (magnetische) Kopplung von Lesegerät und Transponder und Frequenzen typischerweise in den Bereichen von 135 kHz, 13,56 MHz oder 27,125 MHz verwenden.

RFID-Systeme mit Reichweiten über 1 m und Arbeitsfrequenzen im UHF- und Mikrowellenbereich werden in [1] als "Long-range-Systeme" bezeichnet.

Aufgrund der verschiedenen Eigenschaften der einzelnen Systeme resultieren verschiedene Einsatzgebiete. Die spezifische Absorptionsrate (Dämpfung) bei 100 kHz ist für Wasser oder nicht-leitende Stoffe etwa um den Faktor 100 000 niedriger als bei 1 GHz. Niederfrequente Systeme werden daher hauptsächlich wegen der besseren Durchdringung von Objekten benutzt. In verkehrstechnischen Systemen ist dies von Bedeutung, da bei Transpondergehäusen oft metallhaltige Verschmutzungen oder Abdeckungen durch Schnee auftreten können. Bei elektromagnetischen Systemen ist hingegen das Auftreten elektro-magnetischer Störungen zu beachten. Bei der Identifikation von Fahrzeugen wird die benötigte Reichweite des RFID-Systems so ausgelegt, dass bei maximaler Fahrzeuggeschwindigkeit die Aufenthaltsdauer im Ansprechbereich zur Übertragung der vorgesehenen Daten ausreichend ist.

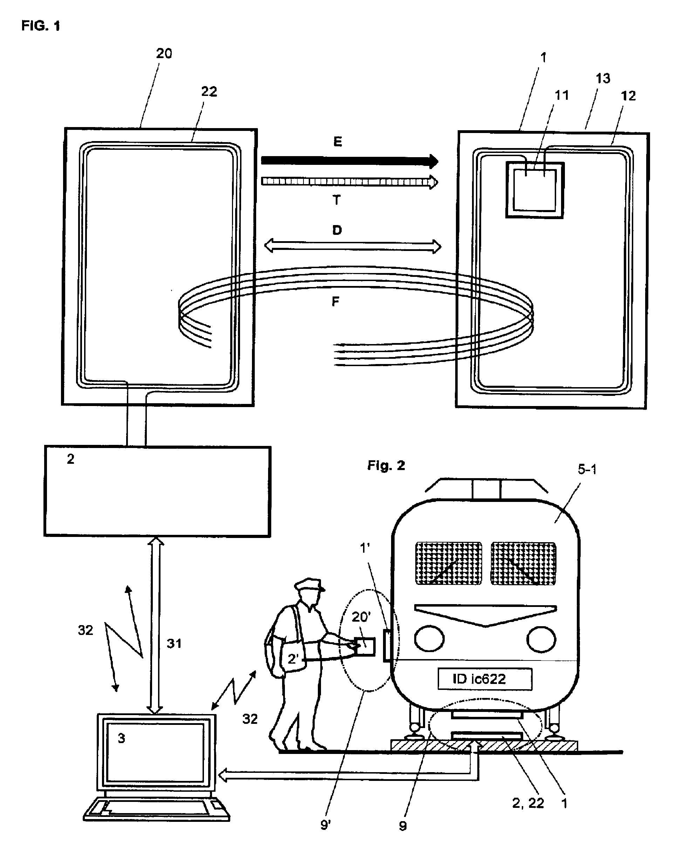

Wie in [1], Seite. 27, Figur 2.18 gezeigt, werden für höhere Reichweiten Mikrowellen-Systeme verwendet, die gegebenenfalls eine "gerichtete Keule" aufweisen. Gemäss [1], Seiten 26 und 27 muss der Abstand zwischen zwei Transpondern so eingerichtet sein, dass sich immer nur ein einziger Transponder im Ansprechbereich des Lesegeräts befindet.

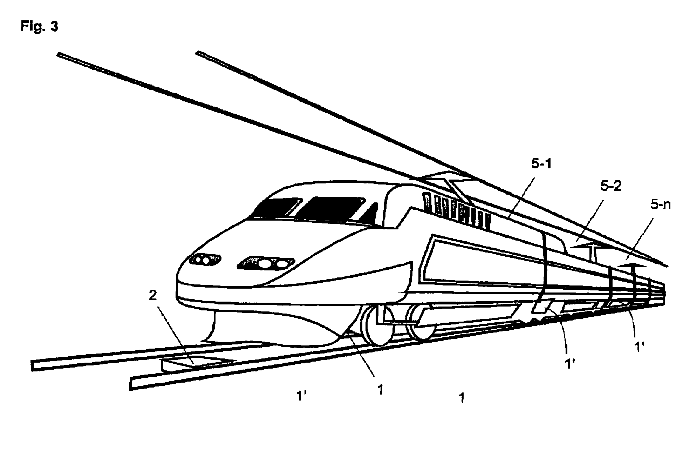

Das aus [2] bekannte Mikrowellen-System erlaubt beispielsweise die Errichtung eines Ad-hoc Netzwerks mittels Transpondern, die Gütern zugeordnet sind und deren Zustand erfassen. Die Transponder werden vorzugsweise einer Ausnehmung in der Verpackung eines Containers vorgesehen (siehe [2], Figur 3a), so dass die Gefahr eines Abscherens oder Abstreifens z.B. während des Beladevorgangs minimalisiert ist. Damit ein Ad-hoc Netzwerk nach Beladen der Container zuverlässig gebildet werden kann, sind wiederum die gegenseitigen Abstände der Transponder und die Sendefrequenzen entsprechend zu wählen. Aufgrund der unterschiedlichen Grössen und der zufälligen Platzierung der Container kann es nämlich vorkommen, dass ein Transponder relativ weit entfernt von den anderen Transpondern positioniert wird. Ad-hoc Netzwerke sind beispielsweise in [3], US 2002'120'750 A1 beschrieben.

Bei der aus [2] bekannten Lösung wird der montierte Transponder mittels einer durch die Wand des Containers hindurch geführten Anschlussverbindung mit einem im Innern des Containers befindlichen Sensormittel verbunden, das beispielsweise die Lufttemperatur, die Luftfeuchtigkeit im Innern des Containers oder mechanische Einwirkungen registriert. Die Installation der Transponder und der Sensoren gestaltet sich daher sehr aufwendig.

Die Kommunikation mit einem Transponder erfolgt gemäss [2], Absatz 0020, nach dem in [4], WO 01/20557 A1 beschriebenen Verfahren. Dabei werden die Transponder über ein erstes Empfangsmodul mittels eines Signals von z.B. der Frequenz 7.68 MHz aus einem Schlafzustand geweckt. Dieses Signal beinhaltet auf einer höheren Schicht beispielsweise des OSI-Modells eine Meldung mit verschiedenen Informationsfeldern. Darunter ist auch eine Information enthalten, aufgrund der ein zweites Sende-/Empfangsmodul in einen intermittierenden Betriebsmodus geschaltet wird, wobei dieses zweite Sende-/Empfangsmodul vorzugsweise auf einer wesentlich höheren Frequenz von z.B. im Bereich von 868 MHz betrieben wird. Aus Sicht eines Transponders ist für die gehende bzw. kommende Kommunikationsverbindung je eine Frequenz vorzusehen, z.B. 868.0 MHz und 868.5 MHz. Möglich ist auch ein Semi-Duplex-Verfahren auf einer einzigen Frequenz. Der Weckvorgang kann alternativ zur vorher genannten Weise mit einem Gerät automatisch bei der Befestigung der Transponder an einem Container oder während des Beladens eines Verkehrsmittels vorgenommen werden. Dazu muss die Kommunikationseinheit beziehungsweise deren Antenne in der Nähe der Ladeöffnung angeordnet sein und den Betriebsmodus "Wecken" aufweisen.

Je nach Betriebszustand der Transponder arbeitet das in [2] offenbarte RFID-System als "Remote-coupling-System" (Betriebszustand "Wecken") oder als "Long-range-System" (Netzwerkbetrieb). Nachteilig bei diesem System sind daher weiter der hohe Schaltungsaufwand zur Realisierung der Netzwerkfunktionalität, die Anfälligkeit auf Dämpfungserscheinungen während des Netzwerkbetriebs sowie das Erfordernis, die Transponder bereits während des Anbringens an einem Container oder während des Beladens des Verkehrsmittels vorzunehmen und dazu jeden Container in die Nähe der Antenne des Schreib-/Lesegeräts zu führen. Nachteilig ist ferner, dass die Transponder nach dem Anbringen an den Container oder nach dem Beladen des Verkehrsmittels permanent aktiviert sind, so dass allfällige Stromversorgungseinheiten permanent belastet werden.

Aus der US-A-5 084 699, dem nachsten Stand der Technik, ist eine Identifikationssystem für ein schienengebundenes Fahrzeug bekannt, an dem ein Transponder befestigt ist, der induktiv mit einem erdgebundenen Sende- und Empfangsgerät koppelbar ist, sobald diese auf gleicher Höhe liegen. Ein Datenaustausch mit diesem System ist daher nur an einem Punkt über das erdgebundene Sende- und Empfangsgerät möglich.

Aus der WO 01/45038 A ist ein Identifikationssystem bekannt, bei dem ein Sende- und Empfangsgerät mit zahlreichen Kopplungselementen verbunden ist, die es erlauben, eine Verbindung zwischen dem Sende- und Empfangsgerät und einem Transponder herzustellen, dessen Position unbestimmt ist.

Aus der EP 0 743 698 A1 ist ein Identifikationssystem für ein schienengebundenes Fahrzeug bekannt, bei dem eine Kommunikation zwischen einem Sende- und Empfangsgerät und dem mit dem Fahrzeug verbundenen Transponder auch in einem Bahnhof gewährleistet bleibt, wenn ein grösserer Abstand zwischen dem Transponder und dem Sende- und Empfangsgerät vorliegt. Nachteilig bei dieser Lösung ist hingegen, dass Signale über die gesamte Länge der Leckleitung abgestrahlt werden müssen und empfangene Signale durch die Leckleitung auch entsprechend gedämpft werden.

Der vorliegenden Erfindung liegt nun die Aufgabe zugrunde, ein verbessertes induktives Identifikationssystem für ein schienengebundenes Fahrzeug zu schaffen.

Diese Aufgabe wird mit einem induktiven Identifikationssystem gelöst, das die in Anspruch 1 angegebenen Merkmale aufweist. Vorteilhafte Ausgestaltungen der Erfindung sind in weiteren Ansprüchen angegeben.

Das induktive Identifikationssystem, das in schienengebundenen Verkehrsmitteln einsetzbar ist, umfasst wenigstens einen ersten Transponder, der einen elektronischen Chip mit einem schleifenförmigen ersten Kopplungselement aufweist, das induktiv mit einem schleifenförmigen zweiten Kopplungselement eines Sende- und Empfangsgeräts, einem Lesegerät oder einem Schreib-/Lesegerät, koppelbar ist, mittels dessen Daten aus dem Chip ausgelesen und/oder in den Chip eingeschrieben werden können. Der Chip ist eine integrierte elektronische Schaltung, die beispielsweise einen Prozessor, einen Speicherbaustein sowie Sende- und Empfangseinheiten aufweist.

Erfindungsgemäss ist eine Kopplungsvorrichtung mit einem schleifenförmigen dritten und wenigstens einem schleifenförmigen vierten Kopplungselement vorgesehen, die mittels wenigstens eines fünften Kopplungselements miteinander gekoppelt sind und von denen das dritte Kopplingselement induktiv mit dem ersten Kopplungselement gekoppelt und von denen das vierte Kopplungselement mit dem zweiten Kopplungselement koppelbar ist.

Das schleifenförmige dritte und das schleifenförmige vierte Kopplungselement sind örtlich voneinander getrennt an Positionen eines Verkehrsmittels, beispielsweise an einem Eisenbahnwagen, befestigt, an denen ein Zugriff durch separate Sende- und Empfangsgeräte erfolgt, von denen eines fest montiert und das andere mobil ist.

Die beispielsweise an der Unterseite von Eisenbahnwagen montierten Transponder können daher mittels Sende- und Empfangsgeräten, so genannten Balisen, abgefragt werden, die zwischen den Eisenbahnschienen im Gleis montiert sind.

Alternativ können die an der Unterseite von Eisenbahnwagen montierten Transponder mittels eines portablen Lese- und/oder Schreibgeräts bequem an Positionen ausgelesen oder beschrieben werden, die für das Dienstpersonal bequem zugänglich sind.

Bevorzugt wird das vierte Kopplungselement im Bereich eines Informationsträgers vorgesehen, der beispielsweise zum Halten von Etiketten und/oder zum Halten eines zweiten Transponders dient, in dem beispielsweise Daten der Fracht abgelegt werden. Der erste Transponder wird vorzugsweise durch den Betreiber des Verkehrsmittels und der zweite Transponder durch den Eigentümer der Fracht verwaltet. Der Eigentümer der Fracht kann beispielsweise einen Eisenbahnwagen mieten und beladen und anschliessend mit einem Transponder versehen, in dem gegebenenfalls verschlüsselte Frachtdaten enthalten sind. Die Vermeidung von Kollisionen bei der Kommunikation mit den Transpondern kann auf logischem oder physikalischem Weg erfolgen. Beispielsweise können die beiden Transponder verschiedene Arbeitsfrequenzen verwenden oder Identifikationsnummern in verschiedenen Bereichen verwenden. Die Etikette und der Transponder im Informationsträger können dabei deckungsgleiche Informationen enthalten.

In einer weiteren vorzugsweisen Ausgestaltung kann das erfindungsgemässe Kopplungssystem zur elektronischen Kopplung von zwei Elementen des Verkehrsmittels, beispielsweise von zwei mechanisch gekoppelten Eisenbahnwagen verwendet werden, die je wenigstens einen ersten Transponder aufweisen, von denen jeder ein erfindungsgemässes Kopplungssystem aufweist, deren vierte Kopplungselemente nach der mechanischen Kopplung der Eisenbahnwagen nebeneinander liegen und somit induktiv gekoppelt sind. Die Kopplung und Entkopplung von Eisenbahnwagen sowie die Konsolidierung aller Daten einer Zugskomposition ist daher in einfacher Weise realisierbar. Dadurch ist natürlich auch die Entkopplung eines Eisenbahnwagens während der Fahrt sofort feststellbar.

Es sind somit mehrere vierte Kopplungselemente einsetzbar, die mit dem dritten Kopplungselement gekoppelt sind.

Das der Kopplung des schleifenförmigen dritten und des wenigstens einen schleifenförmigen vierten Kopplungselements dienende wenigstens eine fünfte Kopplungselement ist beispielsweise ein der galvanischen Kopplung dienendes Koaxialkabel.

Zur Reduktion des Stromverbrauchs der Transponder können diese auch mit Aktivierungs- und Deaktivierungsmodulen versehen sein, die beispielsweise nach Erhalt eines Aktivierungssignals den Transponder einschalten oder diesen nach Erhalt eines Deaktivierungssignals oder nach Ablauf einer mittels eines Timers festgelegten Periode wieder ausschalten.

Die zweiten, dritten, und/oder vierten Kopplungselemente sind beispielsweise Spulen mit wenigstens einer Windung, wobei die dritten und vierten Kopplungselemente vorzugsweise ungleiche Windungszahlen aufweisen (1:X oder X:1). Durch diese Massnahme kann die Stärke der vom Transponder abgegebenen Signale primär- oder sekundärseitig erhöht werden. Ferner können dadurch die primär- und sekundärseitigen Kreise gegeneinander verstimmt werden, so dass eine höhere Bandbreite des Übertragungssystems resultiert. Als vorteilhaft wurden beispielsweise Übersetzungsverhältnisse von 1:n und n:1 mit n im Bereich 4-5 festgestellt.

Das Übersetzungsverhältnis der ersten und/oder zweiten Kopplungselemente ist beispielsweise für Sende- und Empfangsphasen umschaltbar, so dass stets optimale Übertragungsverhältnisse erzielt werden.

Ein weiterer wesentlicher Vorteil der erfindungsgemässen Lösung ist, dass durch die Kopplungsvorrichtung die Dauer verlängert werden kann, während der beispielsweise ein an einem Verkehrsmittel montierter Transponder mit einem Sende- und Empfangsgerät, beispielsweise mit einer im Gleisbett montierten Balise verbindbar ist. Dazu kann das schleifenförmige dritte Kopplungselement am Unterboden des Eisenbahnwagens beispielsweise über einen oder mehrere Meter längs gestreckt angeordnet werden.

Die Erfindung kann ferner auch teilweise oder ausschliesslich mit passiven Transpondern realisiert werden, die beispielsweise ein Oberflächenwellenfilter aufweisen, das nach Erhalt eines Impulses eine einer Identifikation entsprechende Pulssequenz retourniert.

Nachfolgend wird die Erfindung anhand von Zeichnungen näher erläutert. Dabei zeigt:
- Figur 1: in schematischer Darstellung ein bekanntes induktives Identifikationssystem, das einen Transponder 1 aufweist, der mittels einer Koppelspule 12 mit der Koppelspule 22 eines Sende- und Empfangsgeräts 2 verbunden ist, die über eine entsprechende Schnittstelle mit einem Rechner 3 verbunden ist;
- Figur 2: ein in der Eisenbahntechnik verwendetes induktives Identifikationssystem, mit einem ersten Transponder 1 der mittels eines im Gleisbett stationär montierten Sende- und Empfangsgeräts 2 und mit einem zweiten Transponder 1' der mittels eines portablen Sende- und Empfangsgeräts 2' ausgelesen wird;
- Figur 3: eine Zugskomposition mit mehreren Zugskomponenten 51, 5-2, ..., 5-n, die mit ersten und zweiten Transpondern 1, 1' versehen sind;
- Figur 4: in prinzipieller Darstellung ein erfindungsgemässes induktives Identifikationssystem mit einer Kopplungsvorrichtung 1, mittels der die Koppelspule 12 des ersten Transponders 1 mit der Koppelspule 22 des Sende- und Empfangsgeräts 2 gekoppelt ist; und
- Figur 5: eine erfindungsgemässe Kopplungsvorrichtung 1, mittels der die Koppelspule 12 des ersten Transponders 1 mit der Koppelspule 22 des Sende- und Empfangsgeräts 2 sowie mit der Koppelspule 12 eines zweiten Transponders 1' gekoppelt ist;

Figur 1 zeigt in schematischer Darstellung ein bekanntes induktives Identifikationssystem, das einen Transponder 1 aufweist, der mittels einer ersten Koppelspule 12 mit der zweiten Koppelspule 22 eines Sende- und Empfangsgeräts 2 verbunden ist, die über eine entsprechende drahtgebundene oder drahtlose Schnittstelle 31, 32 mit einem Rechner 3 verbunden ist. Der Transponder 1 weist einen Chip 11 bzw. eine elektronische Schaltung auf, die einen Prozessor, eine Speichereinheit sowie Sende- und Empfangsmodule enthält, die mit der Koppelspule 12 verbunden sind. Das mit einem Rechner 3, beispielsweise mit einem Verkehrsleitrechner, verbundene Sende- und Empfangsgerät 2 weist ein einen plattenförmigen Träger 20 auf, auf dem die zweite Koppelspule 22 angeordnet ist. Vom Sende- und Empfangsgerät 2 wird eine der Stromversorgung dienende Wechselspannung E sowie ein Taktsignal T zum Transponder 1 übertragen, um diesen in den Betriebszustand zu versetzen, wonach Daten D zwischen dem Transponder 1 und dem Sende- und Empfangsgerät 2 ausgetauscht werden können. Zur induktiven Kopplung der beiden Koppelspulen 12 und 22 sind diese, so nahe gegeneinander geführt, dass sie von magnetischen Feldlinien F durchstossen werden.

Figur 2 zeigt ein in der Eisenbahntechnik verwendetes induktives Identifikationssystem, mit einem ersten Transponder 1 der mittels eines im Schienenbett stationär montierten Sende- und Empfangsgeräts 2 und mit einem zweiten Transponder 1' der mittels eines portablen Sende- und Empfangsgeräts 2' ausgelesen wird. Das stationär montierten Sende- und Empfangsgerät 2 ist beispielsweise eine der Verkehrserfassung und der Verkehrsleitung dienende Balise, die mit dem Leitrechner 3 verbunden ist, und die dem Verkehrsmittel zugehörige Identifikationsdaten Daten aus dem ersten Transponder 1 ausliest. Im zweiten Transponder 1' sind beispielsweise Daten abgespeichert, die die mittels der Eisenbahn 5-1 beförderte Fracht betreffen.

In Figur 2 sind ferner die sich nicht überlappenden Ansprechbereiche 9, 9' der beiden Transponder 1, 1' eingezeichnet. Es ist daher nicht möglich, mit dem portablen Sende- und Empfangsgerät 2' den ersten Transponder 1 und mit dem stationär installierten Sende- und Empfangsgerät 2 den zweiten Transponder 1' abzufragen.

Figur 3 zeigt eine Zugskomposition mit mehreren Zugskomponenten 5-1, 5-2, ..., 5-n, die mit ersten und zweiten Transpondern 1, 1' versehen sind.

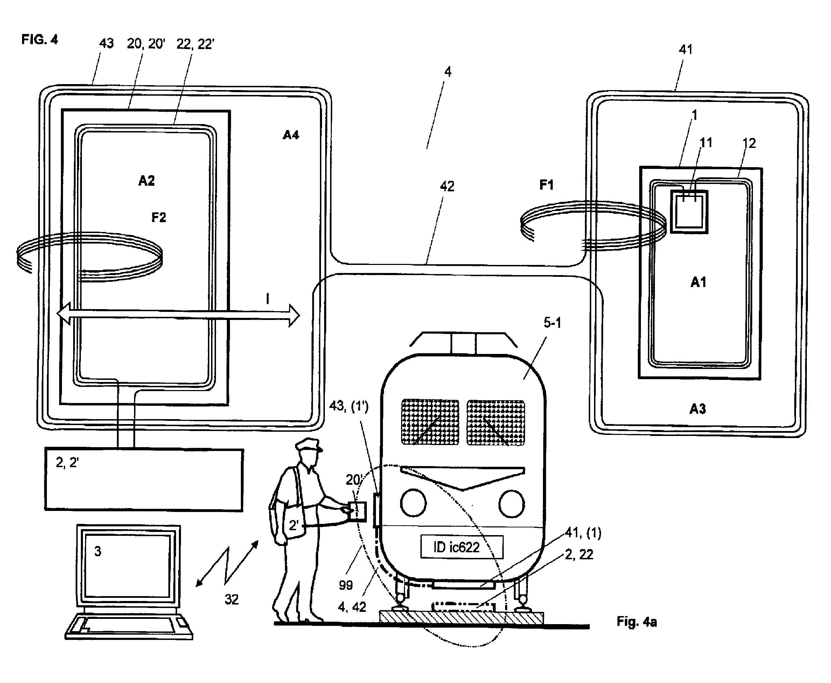

Figur 4 zeigt in einer prinzipiellen Darstellung ein erfindungsgemässes induktives Identifikationssystem mit einer Kopplungsvorrichtung 4, mit einer dritten und einer vierten Koppelspule 41, 43, die mittels wenigstens eines fünften Kopplungselements 42, nämlich einer galvanischen Verbindung miteinander gekoppelt sind. Die dritte Kopplungsspule 41 ist induktiv mit der ersten Kopplungsspule 12 des ersten Transponders 1 gekoppelt. Die vierte Kopplungsspule 43 ist mit dem zweiten Kopplungselement 22 des Sende- und Empfangsgeräts 2 gekoppelt.

In Figur 4a ist die dort gezeigte Lokomotive 5-1, möglicherweise auch ein Eisenbahnwagen 5-2, ..., mit einer Kopplungsvorrichtung 4 versehen, welche erlaubt, den ersten Transponder 1 mittels des stationären oder des portablen Sende- und Empfangsgeräts 2, 2' auszulesen. Die vierte Kopplungsspule 43 ist vorzugsweise an der Stelle vorgesehen, an der ein Informationsträger vorgesehen ist, der beispielsweise zum Halten von Etiketten und/oder zum Halten eines zweiten Transponders 1' dient. Sofern ein zweiter Transponder 1' vorgesehen ist (siehe auch Figur 6), so kann auch dieser mittels des stationären oder des portablen Sende- und Empfangsgeräts 2, 2' ausgelesen werden. Durch Anwendung der erfindungsgemässen Massnahmen wurde der Ansprechbereich der Transponder 1, 1' vorteilhaft erweitert. Zu beachten ist, dass beide Transponder 1, 1' oder nur einer der beiden Transponder 1, 1' eingesetzt werden kann. Sofern ein Lebensmittelproduzent beispielsweise einen Eisenbahnwagen von einem Transportunternehmen mietet, kann beispielsweise nur der zweite Transponder 1' programmiert und an der Seite des Eisenbahnwagens eingesetzt werden. Der zweite Transponder 1' kann daher von der Seite mittels des portablen Lesegeräts 2 und von unten durch erdgebundene Lesegeräte 2 bzw. Balisen ausgelesen werden. Selbstverständlich können die Transponder 1, 1' auch an anderen Positionen des Verkehrsmittels befestigt werden.

In Figur 4 ist ferner gezeigt, dass die umschlossenen Flächen A1, ..., A4 der ersten, zweiten, dritten und/oder vierten Koppelspulen 12, 22, 41, 43 passend gewählt werden können, um eine optimale Kopplung zu erzielen. Sofern die dritte oder die vierte Koppelspule 41, 43 zur Kopplung mit einem stationären Sende- und Empfangsgerät 2 vorgesehen ist, können eine oder mehrere Schlaufen davon über grössere Distanzen 1 gezogen werden, um die Kontaktzeiten zu verlängern.

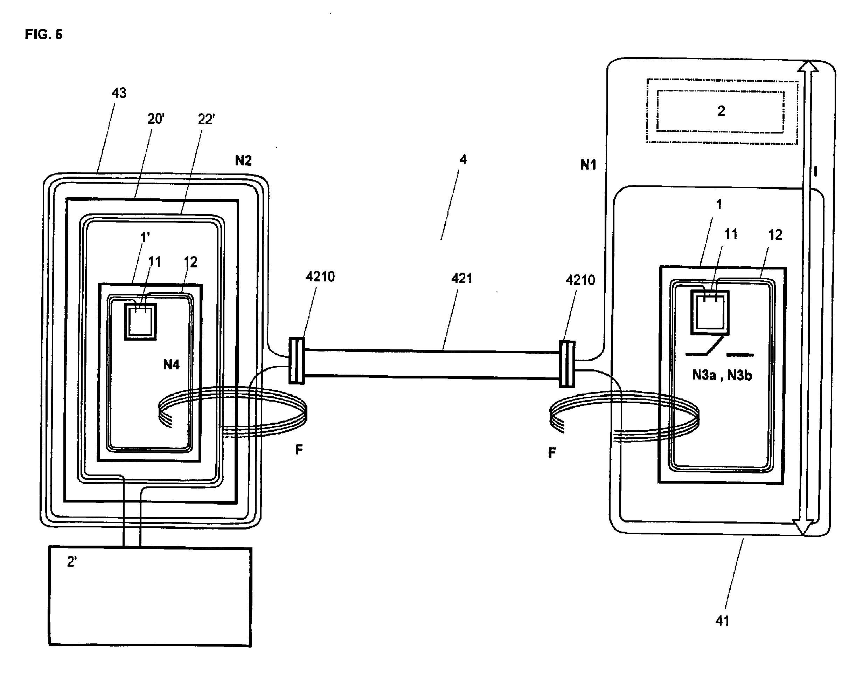

Figur 5 zeigt eine erfindungsgemässe Kopplungsvorrichtung 4, mittels der die erste Koppelspule 12 des ersten Transponders 1 mit der Koppelspule 22 des Sende- und Empfangsgeräts 2 sowie mit der ersten Koppelspule 12 eines zweiten Transponders 1' gekoppelt ist. Das fünfte Kopplungselement 42 bzw. 421, mittels dessen die dritte und die vierte Koppelspule 41, 43 gekoppelt sind, ist ein Koaxialkabel passender Länge, das anhand von Steckverbindern 4210, mit den Koppelspule 41, 43 verbunden ist. Das Übersetzungsverhältnisse N1:N2; N3:N4 der ersten und zweiten und/oder der dritten und vierten Kopplungselemente 12, 22 bzw. 41, 43 ist vorzugsweise ungleich 1, vorzugsweise etwa 1:5 oder 5:1 gesetzt. Beispielsweise ist die Windungszahl N3 der ersten Koppelspule 12 des oder der Transponder 1, 1', 1'' vorzugsweise in Abhängigkeit der Sende- oder Empfangsintervalle zwischen zwei Werten N3a, N3b umschaltbar, so dass für jedes Intervall optimale Übertragungsverhältnisse erzielt werden.

## Patentansprüche

1. Induktives Identifikationssystem für ein schienengebundenes Verkehrsmittel, an dem ein Transponder (1) befestigt ist, der einen elektronischen Chip (11) mit einem schleifenförmigen ersten Kopplungselement (12) aufweist, das induktiv mit einem schleifenförmigen zweiten Kopplungselement (22) eines erdgebundenen ersten Sende- und Empfangsgeräts (2) koppelbar ist, mittels dessen Daten aus dem Chip (11) ausgelesen oder in den Chip (11) eingeschrieben werden können, **dadurch gekennzeichnet, dass** eine Kopplungsvorrichtung (4) mit einem schleifenförmigen dritten und wenigstens einem schleifenförmigen vierten Kopplungselement (41; 43) vorgesehen ist, die mittels wenigstens eines fünften Kopplungselements (42; 420; 421) galvanisch miteinander gekoppelt sind und von denen das dritte Kopplungselement (41) mechanisch und induktiv mit dem ersten Kopplungselement (12) gekoppelt und von denen das vierte Kopplungselement (43) mit dem zweiten Kopplungselement (22, 22') koppelbar ist und dass das schleifenförmige dritte und das schleifenförmige vierte Kopplungselement (41; 43) örtlich voneinander getrennt an Positionen des Verkehrsmittels (5-1; 5-2; ...) befestigt sind, an denen ein Zugriff durch ein mobiles zweites Sende- und Empfangsgeräte (2') erfolgt.

2. Induktives Identifikationssystem nach Anspruch 1, **dadurch gekennzeichnet, dass** zwei schleifenförmige vierte Kopplungselemente (43) der induktiven Kopplung von zwei Elementen (5-1, 5-2, ...) des Verkehrsmittels, wie Eisenbahnwagen, dienen.

3. Induktives Identifikationssystem nach Anspruch 1 oder 2, **dadurch gekennzeichnet, dass** das schleifenförmige dritte Kopplungselement (41) mit dem ersten Transponder (1) in einem Bereich eines Verkehrsmittels (5-1; 5-2; ...) befestigt ist, in dem ein Zugriff durch fest installierte Sende- und Empfangsgeräte (2) erfolgen kann und/oder dass das schleifenförmige vierte Kopplungselement (43), gegebenenfalls mit dem zweiten Transponder (1'), in einem Bereich des Verkehrsmittels (5-1; 5-2; ...) befestigt ist, in dem ein Zugriff durch mobile Sende- und Empfangsgeräte (2') erfolgen kann.

4. Induktives Identifikationssystem nach Anspruch 1, 2 oder 3, **dadurch gekennzeichnet, dass** das schleifenförmige vierte Kopplungselement (43) mit dem ersten Kopplungselement (12) eines zweiten Transponders (1; 1', 1") gekoppelt ist.

5. Induktives Identifikationssystem nach einem der Ansprüche 1 - 4, **dadurch gekennzeichnet, dass** die Transponder (1, 1', 1") mit Aktivierungs- und Deaktivierungsmodulen (110) versehen sind.

6. Induktives Identifikationssystem nach einem der Ansprüche 1 - 5, **dadurch gekennzeichnet, dass** die ersten zweiten, dritten und/oder vierten Kopplungselemente (12; 22; 41; 43) Spulen mit wenigstens einer Windung sind, wobei das Übersetzungsverhältnisse der ersten und zweiten und/oder der dritten und vierten Kopplungselemente (12, 22 bzw. 41, 43) ungleich 1, vorzugsweise etwa 1:5 oder 5:1 gesetzt wird.

7. Induktives Identifikationssystem nach einem der Ansprüche 1 - 6, **dadurch gekennzeichnet, dass** das Übersetzungsverhältnis der ersten und/oder zweiten Kopplungselemente (12; 22) für Sende- und Empfangsphasen umschaltbar ist, wobei die Windungszahl der ersten oder zweiten Kopplungselemente (12; 22) für die Phase der Abgabe von Signalen vom Transponder (1, 1', 1") erhöht oder reduziert wird.

## Claims

1. Inductive identification system for a rail-bound transportation means, on which a transponder (1) is mounted, that comprises an electronic chip (11) with a first loop-shaped coupling element (12), which can inductively be coupled with a second loop-shaped coupling element (22) of an earth-bound transmitter and receiver device (2), with which data can be read from the chip (11) or written into the chip (11), **characterised in that** a coupling device (4) with a third and at least a fourth loop-shaped coupling element (41; 43) is provided, which are galvanically coupled with one another by means of a fifth coupling element (42; 420; 421) and from which the third coupling element (41) is mechanically and inductively coupled with the first coupling element (12) and from which the fourth coupling element (43) can be coupled with the second coupling element (22, 22') and that the third loop-shaped coupling element (41) and the fourth loop-shaped coupling element (43) are mounted locally separated from one another on positions of the transportation means (5-1; 5-2; ...), on which an access by a mobile second transmitter and receiver device (2') can be effected.

2. Inductive identification system according to claim 1, **characterised in, that** two fourth loop-shaped coupling elements (43) are serving for inductively coupling two elements (5-1, 5-2, ...) of the transportation means, such as railway carriages.

3. Inductive identification system according to claim 1 or 2, **characterised in, that** the third loop-shaped coupling element (41) with the first transponder (1) is mounted in an area of the transportation means (5-1; 5-2; ...), in which an access by firmly installed transmitter and receiver devices (2) can be effected and/or that the fourth loop-shaped coupling element (43), if appropriate with the second transponder (1'), is mounted in an area of the transportation means (5-1; 5-2; ...), in which an access by mobile second transmitter and receiver devices (2') can be effected.

4. Inductive identification system according to claim 1, 2 or 3, **characterised in, that** the fourth loop-shaped coupling element (43) is coupled with the first coupling element (12) of a second transponder (1; 1', 1").

5. Inductive identification system according to one of the claims 1 - 4, **characterised in, that** the transponders (1, 1', 1") are provided with activation- und deactivation modules (110).

6. Inductive identification system according to one of the claims 1 - 5, **characterised in, that** the first, second, third and/or fourth coupling elements (12; 22; 41; 43) are coils with at least one turn, whereas the transmission ratio is not equal to 1, preferably approximately 1:5 or 5:1.

7. Inductive identification system according to one of the claims 1 - 6, **characterised in, that** the transmission ratio of the first and/or second coupling elements (12; 22) is can be changed for transmission and receiving phases, whereas the number of turns of the first or second coupling elements (12; 22) is increased or decreased for the phase of the transmission of signals by the transponder (1, 1', 1").

## Revendications

1. Système d'identification pour un moyen de transport ferroviaire auquel est fixé un transpondeur (1) qui présente une puce électronique (11) avec un premier élément de couplage en forme de boucle (12) qui peut être couplé à un second élément de couplage en forme de boucle (22) d'un appareil de réception et d'émission (2), au moyen duquel des données sont lues ou entrées depuis la puce (11) ou dans la puce (11), **caractérisé en ce que** qu'un dispositif de couplage (4) est prévu avec un troisième et au moins un quatrième élément de couplage (41; 43) en forme de boucle qui sont accouplés galvaniquement entre eux au moyen d'au moins un cinquième élément de couplage (42; 420; 421) et dont le troisième élément de couplage (41) est accouplé mécaniquement et inductivement au premier élément de couplage (12) et dont le quatrième élément de couplage (43) est couplé avec le second élément de couplage (22, 22') et **en ce que** le troisième et le quatrième élément de couplage en forme de boucle (41; 43) sont fixés séparément localement l'un de l'autre à des positions du moyen de transport (5-1; 5-2; ...) auxquels un accès par un second appareil mobile d'émission et de réception (2') s'effectue.

2. Système inductif d'identification selon la revendication 1, **caractérisé en ce que** deux quatrièmes éléments d'accouplement en forme de boucle (43) servent au couplage de deux éléments (5-1, 5-2, ...) du moyen de transport tels que des wagons ferroviaires.

3. Système inductif d'identification selon la revendication 1 ou 2, **caractérisé en ce que** le troisième élément de couplage en forme de boucle (41) est fixé avec un premier transpondeur (1) dans une zone d'un moyen de transport (5-1; 5-2; ...) dans laquelle un accès peut s'effectuer par des appareils de réception et d'émission installés fixement (2) et/ou **en ce que** le quatrième élément de couplage en forme de boucle (43), éventuellement avec le second transpondeur (1'), est fixé dans une zone du moyen de transport (5-1; 5-2; ...) dans lequel doit s'effectuer un accès par un appareil (2') de réception et d'émission mobile.

4. Système inductif d'identification selon la revendication 1, 2 ou 3 **caractérisé en ce que** 11e quatrième élément de couplage en forme de boucle (43) est accouplé au premier élément de couplage (12) d'un second transpondeur (1; 1', 1'').

5. Système inductif d'identification selon l'une des revendications 1 à 4, **caractérisé en ce que** le transpondeur (1, 1', 1") est muni de modules d'activation et de désactivation (110).

6. Système inductif d'identification selon l'une des revendications 1 à 5, **caractérisé en ce que** les premiers, seconds, troisièmes et/ou quatrièmes éléments de couplage (12; 22; 41; 43) sont des bobines avec au moins un enroulement, les rapports de transmission des premiers, seconds, troisièmes et/ou quatrièmes éléments de couplage (12, 22 reps. 41, 43) étant inégaux à 1, de préférence au moins 1:5 ou 5:1.

7. Système inductif d'identification selon l'une des revendications 1 à 6, que le rapport de transmission des premiers, seconds, troisièmes et/ou quatrièmes éléments de couplage (12; 22; 41; 43) peut être commuté pour des phases de réception et de réception, le nombre d'enroulement des premiers et secondes éléments de couplage (12>; 22) étant augmenté ou réduit pour la délivrance de signaux depuis le transpondeur (1, 1', 1").
